# EUROPEAN PATENT SPECIFICATION

(11) **EP 0 415 239 B1**
(45) Date of publication and mention of the grant of the patent: **14.12.1994**
(21) Application number: 90116008.5
(22) Date of filing: 21.08.1990
(51) Int. Cl.: G05B 19/23, G05B 19/403

(54) **A numerical control device for a grinding machine**
Eine numerische Steuerungseinrichtung für eine Schleifmaschine
Un dispositif de commande numérique pour une meule

(30) Priority: 30.08.1989 JP 224146/89
(43) Date of publication of application: 06.03.1991
(73) Proprietor: SEIKO SEIKI KABUSHIKI KAISHA, Narashino-shi Chiba (JP)
(72) Inventor: Iijima, Ryuji, c/o Seiko Seiki Kabushiki Kaisha, Narashino-shi, Chiba (JP)
(74) Representative: Fleuchaus, Leo, Dipl.-Ing.

(56) References cited:
- EP-A- 0 260 326
- WO-A-84/02590
- US-A- 4 577 271

## Description

### BACKGROUND OF THE INVENTION

### Field of Industrial Application

The present invention relates to a numerical control device for a grinding machine which grinds manufactured articles to a crowning shape.

### Prior Art

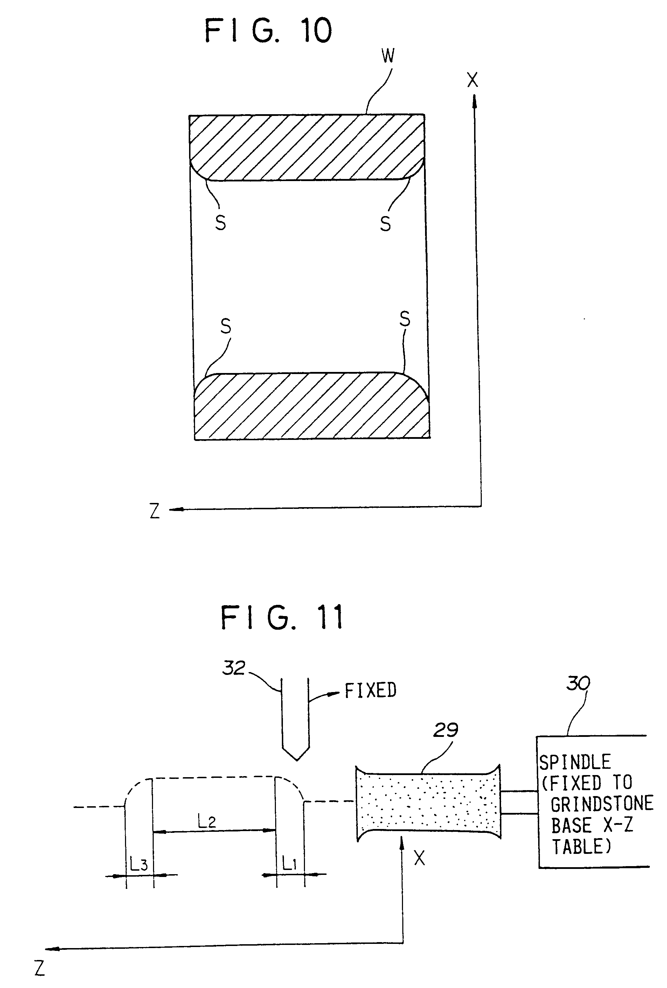

Generally, in a grinding machine which grinds a work W which has a crowning shape S, as shown in Fig. 10, the grindstone table is moved as shown by the dotted line in Fig. 11 in command to carry out the correction process on its grindstone by dresser 32.

That is to say, as well as grindstone 29 being fitted so as to be able to rotate on the end of spindle 30, which is fixed on the grindstone table, which is not shown in the diagram, by causing the grindstone table to move in the X and Z directions the circular arc alterations L1 and L3 and the straight line alterations L2 are carried out through dresser 32 and by means of this the grindstone correction process is carried out.

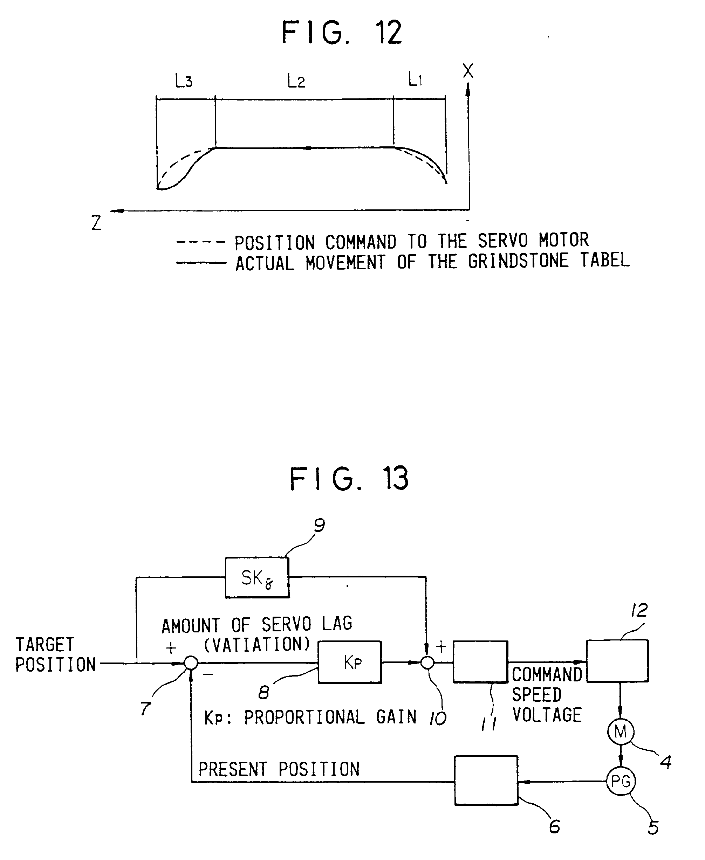

Furthermore, the movement of the said grindstone table is carried out by a conventional feedback control; with this conventional feedback control, the faster the grindstone table is moved the more lag occurs in the servo system and the adjustment shape therefore becomes disordered, as shown in Fig. 12, leading to problems such as that there the grindstone correction process cannot be done in the desired form and so, on.

That is to say, a so-called discommand has been occurring where, as shown in Fig 12, with regard to the actual movement of the grindstone table (shown by solid lines), as against the position command for the servo-motor (shown by the dotted lines), in circular arc alteration L1 the grindstone table has risen late against the position command and, although it follows for the straight line alteration L2, it falls early against the position command for the next circular arc alteration L3.

Thereupon a feed forward control gadget has been proposed which decreases the lag in the servo system in command to decrease this disorder in alteration shape.

What is shown in Fig. 13 is a block diagram of the said feed forward control means and this control means is configured as described below.

That is to say, it is made up of pulse generator 5 linked to servo-motor 4, position converter 6 which converts the output from pulse generator 5 to present position, comparator 7 which compares the present position output from position converter 6 and the commanded target position output, proportional calculator 8 which makes the output of comparator 7, that is the amount of servo lag, into a proportion of the command speed of servo-motor 4, feed forward calculator 9 which adjusts the amount of servo-lag on the basis of the commanded target position output, adding machine 10 which adds the output of the said proportional calculator 8 and the output of the said feed forward calculator 9, analog voltage converter 11 which converts the output of adding machine 10 into servo-motor 4 command speed voltage, servo driver 12 which drives servo-motor 4 on the basis of the output of analog voltage converter 11, and servo-motor 4 which drives on the basis of the output of servo driver 12.

Thus, when the target position is commanded through a configuration like that given above, the present position of servo-motor 4 in comparator 7 is output to the comparator through pulse generator 5 and position converter 6 and the target position and present position are compared in comparator 7. The results of this comparison are output as amount of servo lag to proportional calculator 8, made into a proportion of the servo-motor 4 command speed and output to adding machine 10. Further, the target position command is output to adding machine 10 through feed forward calculator 9 and both the said outputs are added. This addition of the output of feed forward calculator 9 is what adjusts the amount of servo lag. In this adjustment, the amount of servo lag is adjusted through tuning work by humans; and the configuration has been made so as to make the actual grindstone table movement coincide with the position command given to the servo motor.

However, in devices which have such a conventional feed forward control, if the correction process is carried out for grindstones which have a very small amount of change in the X direction as against the Z direction, as shown in Fig. 11, even a very small amount of servo lag comes to have an effect on the grindstone correction shape. In this case, adjustment of the amount of servo lag is carried out by adjusting the feed forward gain, but, because this adjustment of the amount of servo lag is carried out by a tuning operation involving humans, as well as the occurrence of human error there have also been problems such as that time and effort is expended in adjusting the amount of servo lag for the desired correction and that this is difficult. Moreover, if there were changes in the servo system of the above means for such factors as changes in the amount of friction with the passage of time etc., there were problems such as that yet more work was involved in readjustment of the feed forward gain by a tuning operation involving humans for the adjustment of the amount of servo lag.

### SUMMARY OF THE INVENTION

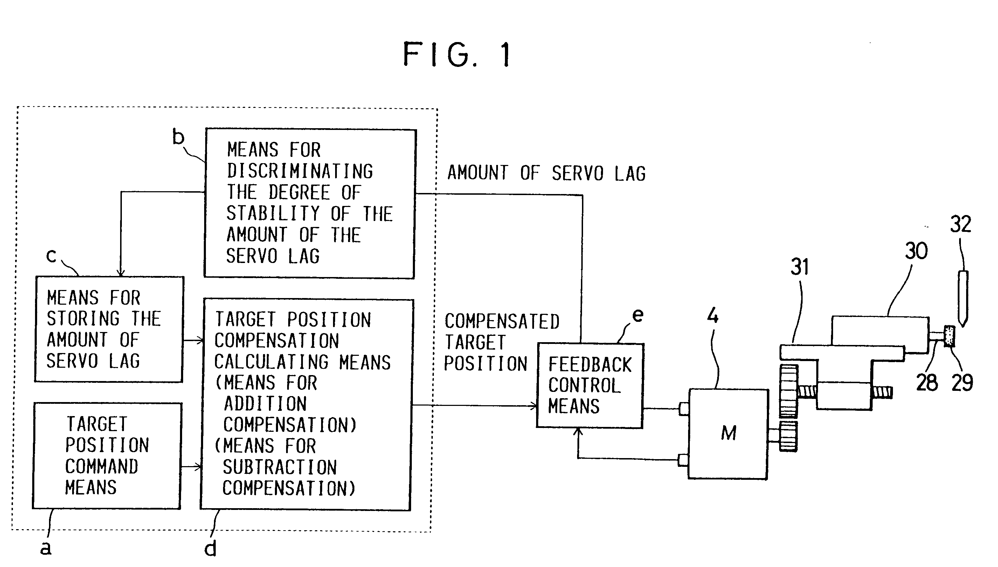

The present invention has been made in the light of the circumstances described above. Its purpose is to provide a numerical control device for a grinding machine which automatically carries out adjustment of the amount of servo lag when carrying out the grindstone correction process. In order to achieve the said objective, the device of the present invention is a numerical control device for a grinding machine which controls a grinding machine equipped with at least spindle 30 which has grindstone 29 for grinding at the end of rotor shaft 28, grindstone table 31 where the said spindle is fixed, dresser 32 which carries out the correction process for the said grindstone and servo motor 4 which moves the said dresser in the dresser shaft center X and rotor shaft center Z directions relative to the said grindstone, as shown in Fig. 1 claim correspondence diagram, wherein the said numerical control device is equipped with
command means a which commands the target position of the said servo-motor 4 for each unit time,
discriminating means b which discriminates the degree of stability of the amount of servo lag of the said servo-motor 4,
storage means c which stores afresh the amount of servo lag discriminated as being stable by the said discriminating means b,
compensation calculating means d which calculates the compensation for the said target position on the basis of the output from the said command means a and storage means c, and feedback control means e which drives servo-motor 4 on the basis of the output from the said compensation calculating means d and the said servo-motor 4 and which outputs the amount of servo lag of the said servo-motor 4 to the said discriminating means b; and wherein the said compensation calculating means d consists of an adding means which adds the amount of servo lag stored in the storage means c at the time of the previous grindstone correction process to the target position and of a subtraction means which subtracts the amount of servo lag stored in the storage means c at the time of grindstone correction from the target position.

The numerical control device for a grinding machine in the present invention operates so as to carry out the compensation which adds or subtracts the amount of servo lag to or from the target position for each unit of time obtained by track calculation at each unit of time on the basis of the amount of servo lag stored in the storage means and to carry out feedback control using the said compensated target position.

### BRIEF DESCRIPTION OF THE DRAWINGS

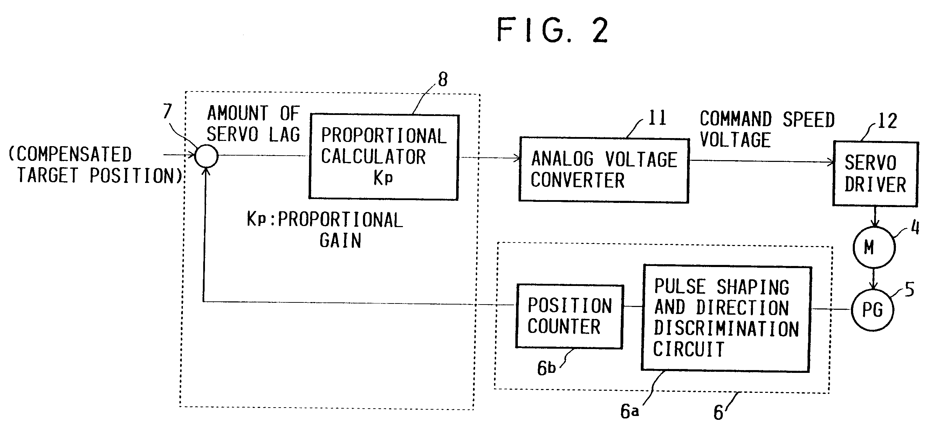

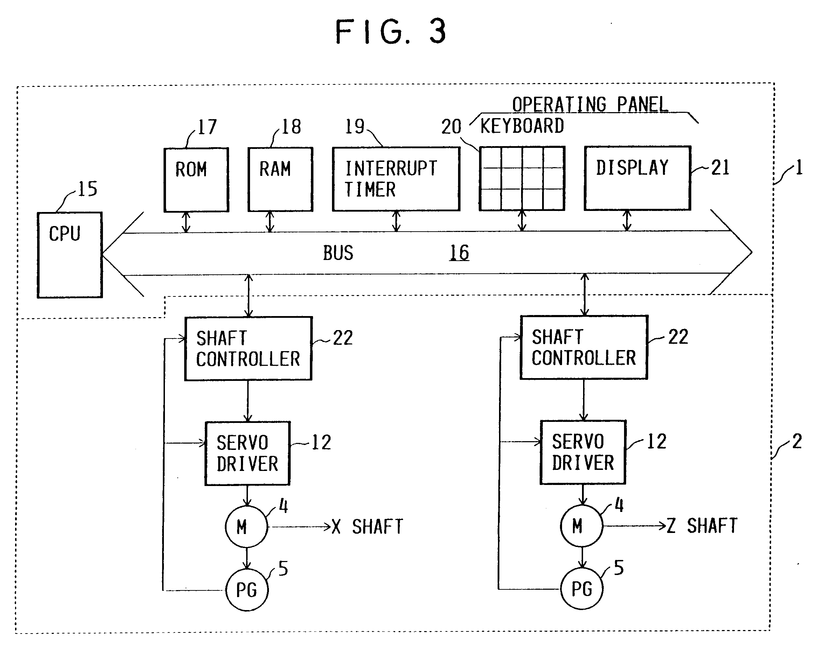

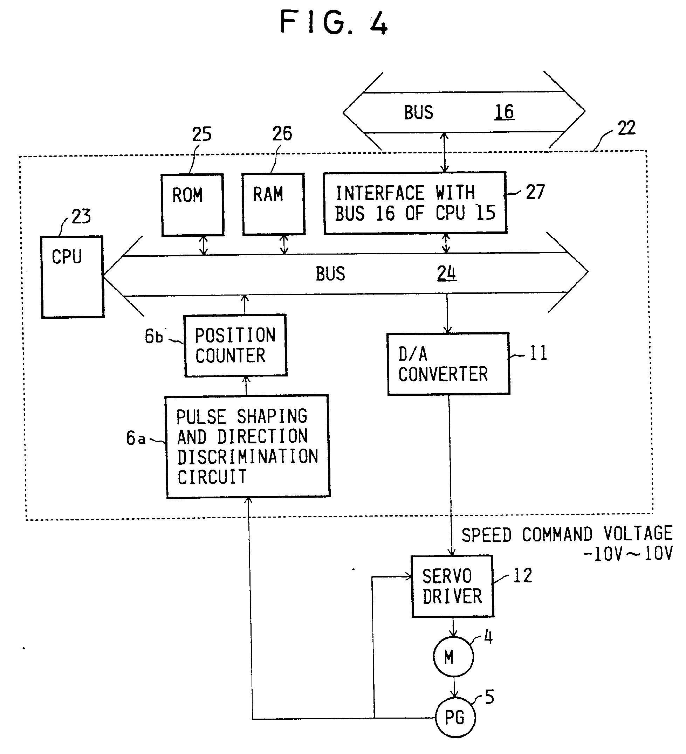

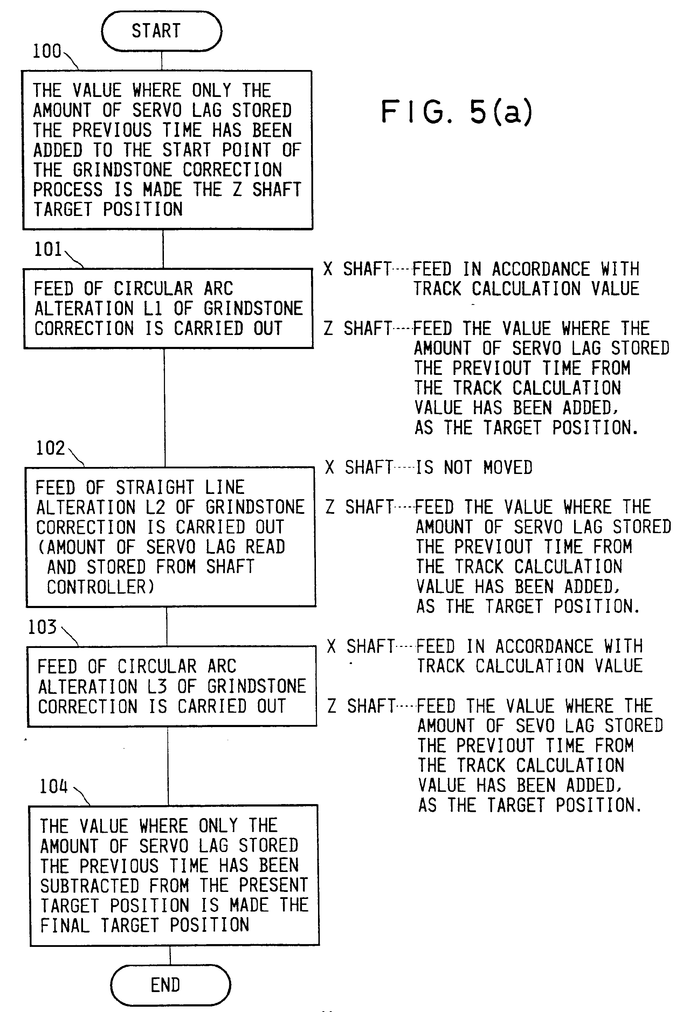

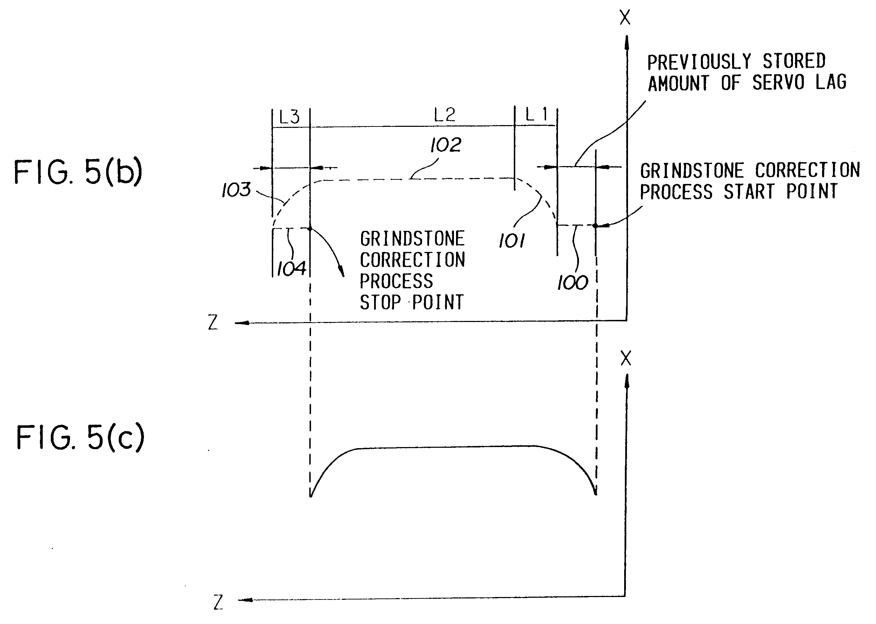

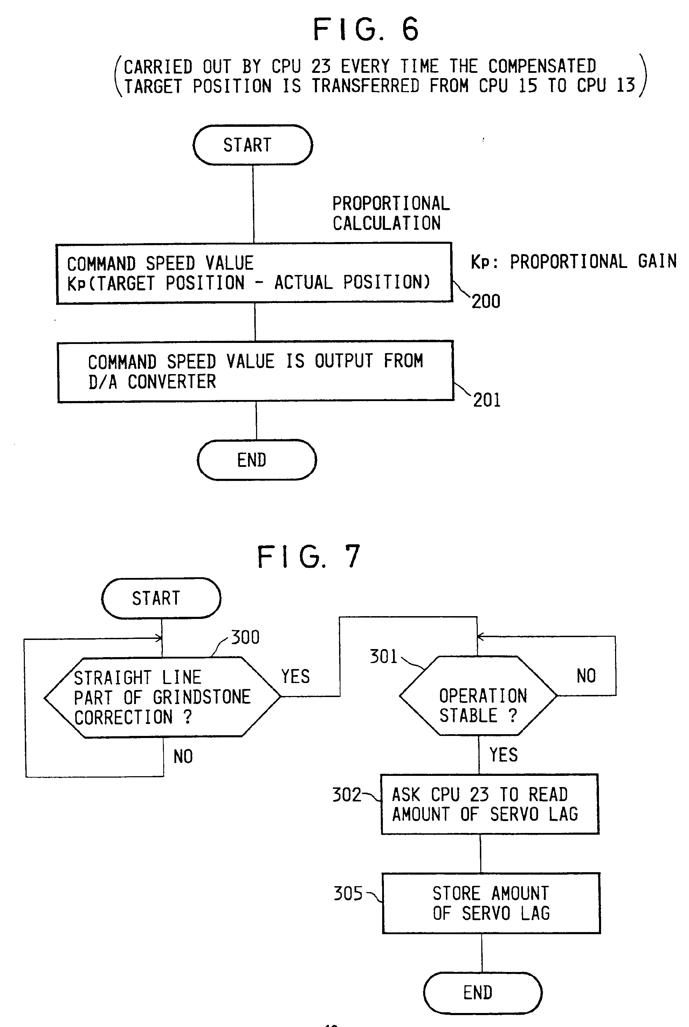

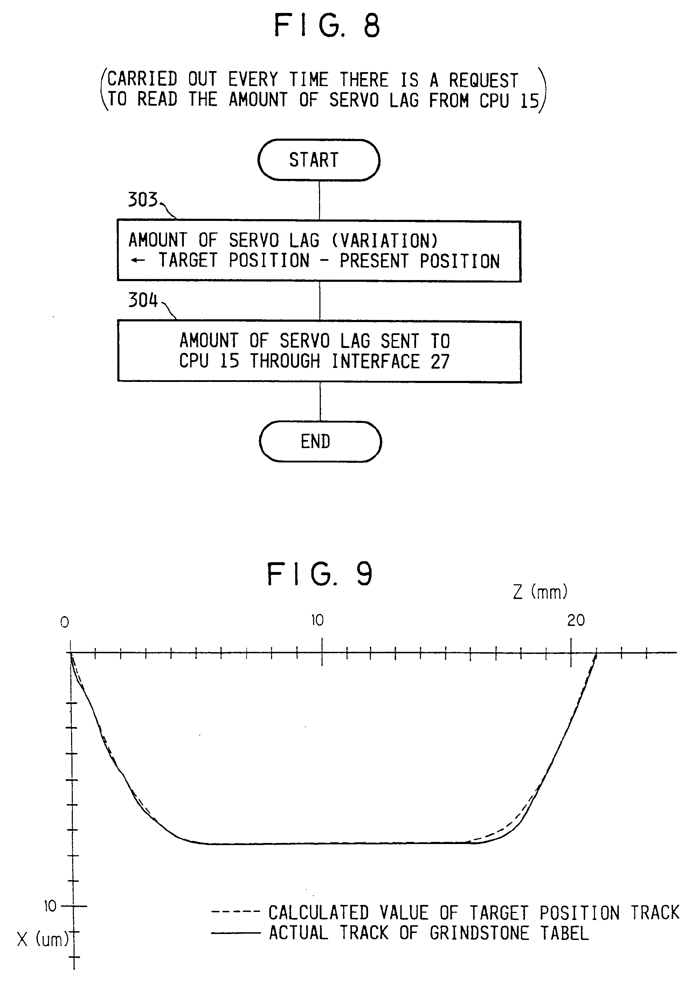

Fig. 1 is a diagram corresponding to the claims for the device of this patent application. Fig. 2 is a block diagram of the servo process system applied to the present invention. Fig. 3 is a block diagram of the hardware of the system shown in Fig. 2. Fig. 4 is a block diagram of shaft controller 22 shown in Fig. 3. Fig. 5(a) is a flow chart of target position compensation carried out by CPU 15. Fig. 5 (b) is a compensation diagram of the compensated target position command sent to the shaft controller (CPU 23). Fig. 5 (c) is a diagram of the actual track of the grindstone table. Fig. 6 is a flow chart showing the feedback control of CPU 23. Fig. 7 is a flow chart for storing the amount of servo lag by CPU 15. Fig. 8 is a flow chart where the amount of servo lag is calculated by CPU 23. Fig. 9 is a diagram of the target position track and tracks showing the actual movement of the grindstone table resulting from tests using the gadget in the present patent application. Fig. 10 is a section drawing of work which has a crowning shape. Fig. 11 is an explanatory drawing showing the grindstone correction track in command to correct the work in Fig. 10. Fig. 12 is a track diagram showing the position command to the servo-motor when grindstone correction was carried out by a conventional feedback control and the actual movements of the grindstone table. Fig. 13 is a block diagram showing a conventional feedback control.

### DETAILED DESCRIPTION OF THE INVENTION

A detailed explanation of the invention follows using Fig. 2 to Fig. 11.

Identical symbols are used for items which are identical with the conventional example described above and no detailed description is given for these. In this embodiment the dresser is fixed with the dresser shaft center established as the X axis and the rotor shaft center as the Z axis; and an explanation is made for carrying out the correction process for the grindstone by moving the grindstone table in the X and Z directions by means of the servo motor.

Fig. 2 shows the block composition of the servo process system applied in the present invention. This servo process system is a control which gives the compensated target position for which the compensation operation described later has been applied to servo-motor 4, which is linked to the grindstone table, and gives feedback of the present position of the servo-motor.

The said feedback control is made up of pulse generator 5 which is linked to servo-motor 4, position converter 6 which is equipped with pulse shaping and direction discrimination circuit 6a, which converts the output of pulse generator 5 into present position, and with position counter 6b, comparator 7 which compares the output of the position converter (present position) and the compensated target position and makes it the amount of servo lag, proportional calculator 8 which makes the output of the comparator (the amount of servo lag) into a proportion of the command speed of the servo-motor, an analog voltage converter 11 which converts the proportional calculator output into servo-motor command speed voltage, a servo driver 12 which drives servo-motor 4, and servo-motor 4. Fig. 3 is the hardware configuration of the system in Fig 2. In it are shown the hardware 1 of the micro-computer which calculates the compensation for the said compensated target position and the hardware 2 of the micro-computer which carries out the said feedback control.

The said hardware 1 is made up of CPU 15, ROM 17 which stores the system software in bus 16 of CPU 15, RAM 18 which stores the parameters and the like, interrupt timer 19 which puts an interruption into CPU 15 at each set time, and an operating panel equipped with keyboard 20 and display 21. Further, the said hardware 2 is made up of a pair of shaft controllers 22 and 22 which are connected to bus 16, servo drivers 12 and 12 which drive the servo-motors by the output from the shaft controllers, servo-motors 4 and 4 for Z shaft drive or X shaft drive, and pulse generators 5 and 5 linked to the servo-motors 4 and 4. The output of pulse generators 5 and 5 is input to servo-drivers 12 and 12 and shaft controllers 22 and 22.

Additionally, the said shaft controller 22 is explained in detail by Fig. 4. That is to say, CPU 23, ROM 25 which stores the system software in bus 24 of CPU 23, RAM 26 which stores the parameters and the like,interface 27 which connects CPU 15 and CPU 23, pulse shaping and direction discriminating circuit 6a which shapes the pulse wave shape of pulse generator 5 and discriminates the direction of rotation of servo-motor 4, position counter 6b which counts the pulses of pulse generator 5 and makes them the present position, and D/A converter 11 which converts digital to analog, are connected for shaft controller 22.

Further, the flow charts shown in Fig. 5 and Fig. 7 are stored in the said ROM 17, while the flow charts shown in Fig. 6 and Fig. 8 are stored in the said ROM 25. This embodiment has the configuration given above and an explanation is given below of its operation according to the flow charts.

Moreover, in this embodiment the circular arc alterations L1 and L3 and straight line alteration L2 in Fig. 11 are to be carried out in command to effect the correction process for grindstone 29, as shown in Fig. 11.

Further, as the component of the velocity of the grindstone in the X axis direction is small, the amount of X axis servo lag is small and can be ignored and target position compensation will not be made for the X axis but will be made for the Z axis only.

Fig. 5 is the flow chart which carries out compensation of the target position. If the X and Z target positions for circular arc part L1, straight line part L2 and circular arc part L3 are track calculated for each unit of time in CPU 15 and output, the flow chart in Fig. 5 (a) is put into effect.

That is to say, immediately before the start of the grindstone correction process the target position Z of the Z axis becomes the start point for the grindstone correction process. And simultaneously with the start of the grindstone correction process, the target position Z of the Z shaft, compensated to a value where only the amount of servo lag stored the previous time is added to the grindstone correction process starting point, is fed from CPU 15 to CPU 23. At this time the X axis target position X does not change (step 100). Next, for circular arc adjustments L1 in the grindstone correction process, the X axis target position X commanded from CPU 15 is made to be as for the track calculation value, the Z axis target position Z is made to be the target position compensated from the track calculated value by a figure where the amount of servo lag stored the previous time is added, and X and Z are sent to CPU 23 (step 101). In addition, for the straight line adjustment L2 in the grindstone alteration process, the X axis target position X commanded from CPU 15 is not moved, the Z axis target position Z is made to be the target position compensated from the track calculated value by a figure where the amount of servo lag stored the previous time is added, and X and Z are sent to CPU 23 (step 102): and for circular arc adjustment L3 in the grindstone correction process, the X axis target position X is made to be as for the track calculated value, and the Z axis target position Z is made to be the target position compensated from the track calculated value by a figure where the amount of servo lag stored the previous time is added; and X and Z are sent to CPU 23 (step 103).

Upon completion of circular arc adjustment L3, the Z axis target position Z becomes a value where only that part of the amount of previously stored servo lag in the Z axis positive direction has been added on from the original grindstone correction process stop point. Accordingly, a value where only that part of the amount of previously stored servo lag is finally subtracted from this target position Z is made to be the Z axis final target position and it is sent from CPU 15 to CPU 23. The X axis target position X at this time does not change (step 104).

Further, in the steps 100 to 104 described above, when the compensated target position is sent to CPU 23 the flow chart shown in Fig. 6 is implemented. That is to say, for the flow chart in Fig. 6, when the compensated target position is transferred from CPU 15 to CPU 23 through bus 16, interface 27 and bus 24, the present position, which is output through circuit 6a, which pulse shapes the output of pulse generator 5 linked to servo-motor 4 and discriminates direction, and position counter 6b, is subtracted from the compensated target position, the amount of servo lag which is the result of this subtraction is multiplied by proportional gain Kp, the value of the command speed is calculated (step 200), and then the command speed is output from the D/A converter (step 201). This command speed is applied to servo-motor 4 through servo driver 12 and the servo-motor is driven and the grindstone table is moved.

However, in step 100 and step 104, as the servo system is in fact only lagging by the amount of servo lag only, the grindstone table hardly moves.

Therefore the track computed value of the target position for the grindstone table before compensation and the actual track of the grindstone table coincide and the desired grindstone correction process can be carried out.

Further, Fig. 7 is a flow chart where the amount of servo lag is stored. If an explanation is made on the basis of this flow chart, a discrimination is made in CPU 15 as to whether or not the grindstone correction process is straight line adjustment L2 or not (step 300). If the grindstone correction process is not straight line adjustment L2, it returns to the discrimination loop step 300). Meanwhile, CPU 15 is carrying out the track calculation and output process shown in Fig. 5 in parallel. If, on the other hand, the grindstone correction process is straight line adjustment L2, discrimination of operating stability of the amount of servo lag is carried out (step 301) and a demand is sent to CPU 23 through interface 27 to read the amount of servo lag. For operating stability discrimination, the amount of servo lag is read several times in a set interval, and when the amount of servo lag has become constant it is judged to be stable (step 302). And when a demand is received in CPU 23, the present position is subtracted from the target position on the basis of the flow chart in Fig. 8 (step 303), and the amount of servo lag resulting from the subtraction is transferred to CPU 15 through interface 27 (step 304).

CPU 15 stores this amount of servo lag in RAM 18 (step 305). This stored amount of servo lag is used as the reference for the amount of compensation of the target position the next time the grindstone correction process is carried out.

Consequently, every time the grindstone correction is carried out the amount of servo lag is stored afresh, and it is possible to use the device without adjustment even for changes in the servo system with the passage of time because this stored amount of servo lag is used for the target position compensation when next carrying out the grindstone correction process.

Fig. 9 is test data when the device in this patent application was actually operated. The dotted lines show the calculated value of the target position track and the solid lines show the actual track of the grindstone table. As is clear from this test data, the actual track of the grindstone table can be virtually made to coincide with the calculated value of the target position track.

In the above embodiment, the configuration was such that the dresser was fixed and the grindstone table was moved in the X and Z directions; but instead of this the dresser can move in the X and Z directions and the grindstone table can be fixed, or the dresser may move in the X direction and the grindstone table may move in the Z direction. Also, the dresser may move in the Z direction and the grindstone table may move in the X direction.

As described above, the numerical control device for a grinding machine in the present invention has advantages such as that there is little distortion in the grindstone shape after the grindstone correction process occurring on account of the amount of servo lag on account of compensating the target position of the servo-motor and giving the servo position command on the basis of the amount of servo lag stored during the previous grindstone correction process, and it is possible to carry out the desired correction process in addition to which, adjustment of the amount of servo lag is stored afresh each time the grindstone correction process is carried out and no human tuning operation is required, and labor and time can therefore be reduced and operability improved, and, in addition, as use of the device is possible without adjustment for changes in servo lag etc. with the passage of time with the device in this patent application, there is no bother with adjustment work and operability improves still further.

## Claims

1. A numerical control device for a grinding machine equipped at least with a spindle (30) which has a grindstone (29) for grinding on a rotor shaft (28), a grindstone table (31) where the said spindle (30) is fixed, a dresser (32) which carries out a correction process for the said grindstone (29), and a servo motor (4) which moves at least one of the said grindstone (29) land said dresser (32) relatively in the dresser shaft center X and the rotor shaft center Z directions, wherein the numerical control device for a grinding machine is equipped with a command means (a) which commands the said servo motor target position for each unit time,
a discriminating means (b) which discriminates the degree of stability of the amount of servo lag of the said servo motor (4), a storage means (c) which stores afresh the amount of servo lag discriminated as being stable by the said discriminating means (b), a compensation calculating means (d) which calculates the compensation for the said target position on the basis of the output from the said command means (a) and storage means (c), and a feedback control means (e) which drives the servo motor (4) on the basis of the output of the said compensation calculating means (d) and said servo motor (4) and outputs the amount of servo lag of the said servo motor (4) to the said discriminating means (b).

2. The numerical control device for a grinding machine disclosed in claim 1 where the said compensation calculating means (d) consists of an adding means which adds the amount of servo lag stored in the storage means (c) during the previous grindstone correction process to the target position and of a subtraction means which subtracts the amount of servo lag stored in the storage means (c) during the previous grindstone correction from the target position.

## Patentansprüche

1. Eine numerische Steuervorrichtung für eine Schleifmaschine, die ausgerüstet ist mit mindestens einer Spindel (30) mit einem Schleifstein (29) zum Schleifen auf einer rotierenden Welle (28), einem Schleifsteintisch (31), auf dem die Spindel (30) befestigt ist, einem Abrichtwerkzeug (32) zur Durchführung eines Korrekturvorgangs für den Schleifstein (29) und einem Servomotor (4), der mindestens einen und zwar den Schleifstein (29) oder das Abrichtwerkzeug (32) in der Abrichtwerkzeugwellenmittelachse als X-Richtung und in der Rotorwellenmittelachse als Z-Richtung relativ bewegt, wobei die numerische Steuervorrichtung für eine Schleifmaschine ausgerüstet ist mit
einem Steuermittel (a), das die Zielposition des Servomotors für jede Zeiteinheit festlegt,
einem Unterscheidungsmittel (b), das den Stabilitätsgrad des Servoverzögerungswerts des Servomotors (4) festlegt,
einem Speichermittel (c), das den durch das Unterscheidungsmittel (b) als stabil festgelegten Servoverzögerungswert neu speichert,
einem Kompensationsberechnungsmittel (d), das die Kompensation für die Zielposition auf der Grundlage des Ausgangssignals vom Steuermittel (a) und vom Speichermittel (c) berechnet, und
einem Rückkopplungssteuermittel (e), das den Servomotor (4) auf der Grundlage des Ausgangssignals aus dem Kompensationsberechnungsmittel (d) und dem Servomotor (4) antreibt, und das den Servoverzögerungswert des Servomotors (4) an das Unterscheidungsmittel (b) ausgibt.

2. Die numerische Steuervorrichtung für eine Schleifmaschine gemäß Anspruch 1, wobei das Kompensationsberechnungsmittel (d) aus einem Addiermittel besteht, das den während des vorbeugenden Schleifstein-Korrekturvorgangs im Speichermittel (c) gespeicherten Servoverzögerungswert zur Zielposition addiert, und einem Subtraktionsmittel, das den während des vorhergehenden Schleifstein-Korrekturvorgangs im Speichermittel (c) gespeicherten Servoverzögerungswert von der Zielposition subtrahiert.

## Revendications

1. Un dispositif de commande numérique pour une machine à meuler équipée d'au moins une broche (30) qui a une meule (29) montée sur un arbre tournant (28), une table de meule (31) à laquelle est fixée la broche (30), une molette à dresser (32) qui exécute un processus de correction de la meule (29), et un servomoteur (4) qui déplace au moins la meule (29) ou la molette à dresser (32) respectivement dans les sens de l'axe X de l'arbre de la molette à dresser et de l'axe Z de l'arbre tournant, dans lequel le dispositif de commande numérique pour une machine à meuler est équipé
d'un moyen de commande (a) qui commande la position-cible du servomoteur pour chaque unité de temps,
d'un moyen de discrimination (b) qui sélectionne le degré de stabilité de l'amplitude du retard du servomoteur (4), d'un moyen de stockage (d) qui remémorise l'amplitude du retard du servomoteur jugée stable par le moyen de discrimination (b),
d'un moyen de calcul de compensation (d) qui calcule la compensation de la position-cible sur la base de la sortie du moyen de commande (c) et du moyen de stockage (c), et
d'un moyen d'asservissement (e) qui entraîne le servomoteur (4) sur la base de la sortie du moyen de calcul de compensation (d) et du servomoteur (4) et envoie l'amplitude du retard du servomoteur (4) au moyen de discrimination (b).

2. Le dispositif de commande numérique pour une machine à meuler décrit dans la revendication 1, où le moyen de calcul de compensation (d) est constitué d'un moyen d'addition qui ajoute à la position-cible l'amplitude du retard du servomoteur mémorisée dans le moyen de stockage (c) au cours du précédent processus de correction de la meule et d'un moyen de soustraction qui soustrait de la position-cible l'amplitude du retard du servomoteur mémorisée dans le moyen de stockage (c) au cours de la précédente correction de la meule.
